# FASCICULE DE BREVET EUROPEEN

(11) **EP 2 196 809 B1**
(45) Date de publication et mention de la délivrance du brevet: **07.03.2012**
(21) Numéro de dépôt: 09177532.0
(22) Date de dépôt: 30.11.2009
(51) Int. Cl.: G01P 5/26, G01S 17/58, G01S 17/87

(54) **Sonde d'anémométrie laser bi-axe**
Zweiachsige Laser-Windmessersonde
Bi-axial laser anemometric probe

(30) Priorité: 02.12.2008 FR 0806767
(43) Date de publication de la demande: 16.06.2010
(73) Titulaire: Thales, 92200 Neuilly Sur Seine (FR)
(72) Inventeur: Rodeau, Philippe, 26320, Saint Marcel lès Valence (FR); Schlotterbeck, Jean-Pierre, 26300, Rochefort-Samson (FR)
(74) Mandataire: Esselin, Sophie

(56) Documents cités:
- WO-A-02/50565
- NISHI H ET AL: "Complementary 2 dimensional laser Doppler velocimeter with an optical fiber probe" PROCEEDINGS OF THE SPIE - THE INTERNATIONAL SOCIETY FOR OPTICAL ENGINEERING USA, vol. 1267, 1990, pages 257-263, XP002539077 ISSN: 0277-786X

## Description

La présente invention porte sur une sonde d'anémométrie laser de détection homodyne optique de décalage de fréquence par effet Doppler.

Il est connu des sondes d'anémométrie laser mono-axe utilisées pour mesurer les vitesses des aéronefs par rapport au milieu environnant.

Ce type de sonde s'appuie sur une technique consistant à mesurer le décalage de fréquence, représentatif de la vitesse relative par rapport à l'air, entre un faisceau laser émis dans l'atmosphère et le faisceau rétrodiffusé par les aérosols naturels de l'air, utilisés comme des traceurs de champ de vent. On parle d'anémométrie laser Doppler longitudinale car le décalage de fréquence qui résulte de l'effet Doppler est directement proportionnel à la projection du vecteur vitesse sur l'axe de visée.

L'information utile, portée par le décalage de fréquence Doppler, est obtenue en effectuant une détection de type cohérent ; un faisceau issu d'une source de lumière cohérente, par exemple un laser, est séparé en deux faisceaux. Un premier faisceau appelé faisceau signal est envoyé dans la zone de mesure et un second faisceau appelé faisceau de référence ou oscillateur local constitue une référence pour la détection du décalage de fréquence Doppler.

Il est connu d'utiliser, notamment embarquées sur des aéronefs, des sondes d'anémométrie laser mono-axes, fonctionnant à courtes distances, au moyen desquelles on obtient une projection du vecteur vitesse relative de l'aéronef par rapport à l'air sur un axe de mesure. Les angles d'incidence et de dérapage locaux d'un aéronef pouvant varier fortement, il est quasiment impossible d'obtenir directement la norme du vecteur vitesse relative par rapport à l'air.

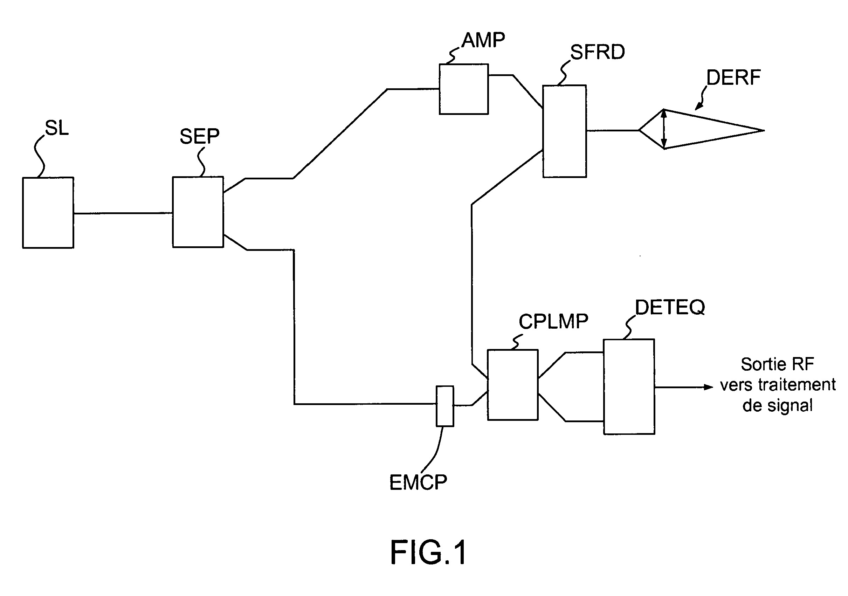

Telle qu'illustrée sur la figure 1, une sonde d'anémométrie laser mono-axe comprend une source laser SL fournissant une onde de référence polarisée linéairement, un séparateur SEP séparant le signal en provenance de la source laser SL en un signal transmis vers un amplificateur AMP et un signal transmis vers un coupleur à maintien de polarisation CPLMP. La sonde d'anémométrie laser mono-axe comprend également un dispositif émetteur/récepteur DERF de faisceau selon la direction de l'axe de la sonde, ainsi qu'un séparateur de faisceau rétrodiffusé SFRD disposé entre l'amplificateur AMP et le dispositif émetteur/récepteur DERF et transmettant le signal en provenance de l'amplificateur AMP vers le dispositif émetteur/récepteur DERF. Le signal rétrodiffusé par le dispositif émetteur/récepteur DERF est transmis par le séparateur de faisceau rétrodiffusé SFRD vers le coupleur à maintien de polarisation CPLMP. La sonde d'anémométrie laser mono-axe comprend, en outre, un élément de mise en cohérence de polarisation EMCP disposé en amont du coupleur à maintien de polarisation CPLMP afin d'assurer que le signal rétrodiffusé et l'onde de référence possèdent la même polarisation en entrée du coupleur à maintien de polarisation CPLMP, et un détecteur équilibré DETEQ disposé en aval du coupleur à maintien de polarisation CPLMP. Le coupleur à maintien de polarisation CPLMP fournit sur chaque voie de sortie la moitié du signal rétrodiffusé et la moitié de l'onde de référence. Les deux signaux de sortie du coupleur à maintien de polarisation sont transmis au détecteur équilibré DETEQ, qui, par exemple, comprend deux diodes, et délivre en sortie la différence des signaux fournis par les deux diodes. La portion de chaque signal changeant de canal dans le coupleur à maintien de polarisation CPLMP subit un retard de phase et les battements produits lors de la détection sur les deux diodes du détecteur équilibré DETEQ sont en opposition de phase. La sortie différentielle permet donc d'additionner les puissances de signal reçues. Le signal de sortie du détecteur équilibré DETEQ est ensuite transmis à une unité de commande électronique non représentée, pour être traité.

Le document WO02/50565A1 divulgue un anémomètre à laser connu, de conception proche de celle de la figure 1, relativement aisé à installer.

L'association de deux sondes d'anémométrie laser mono-axes, d'axes non parallèles permet d'obtenir la projection du vecteur vitesse relative par rapport à l'air dans un plan défini par ces deux axes non parallèles. A proximité de l'enveloppe extérieure de l'aéronef, la vitesse relative de l'aéronef par rapport à l'air ne peut être que peu inclinée par rapport à l'enveloppe extérieure de l'aéronef, ce qui permet, à partir de la projection de la vitesse relative dans un plan contenant les deux axes non parallèles des deux sondes, de déterminer avec une précision suffisante, le vecteur vitesse relative à trois dimensions de l'aéronef par rapport à l'air environnant.

L'association de deux sondes mono-axe formant une sonde bi-axe a un coût élevé, et la duplication de certains éléments augmente les risques de pannes.

Un but de l'invention est de pallier ces problèmes.

Il est proposé, selon un aspect de l'invention, une sonde d'anémométrie laser de détection homodyne optique de décalage de fréquence par effet Doppler, comprenant une source laser fournissant une onde de référence polarisée linéairement, un premier séparateur du signal en provenance de la source laser en un signal transmis vers un premier amplificateur et un signal transmis vers un coupleur à maintien de polarisation. La sonde comprend, en outre, un premier dispositif émetteur/récepteur de faisceau selon une première direction, un premier séparateur de faisceau rétrodiffusé disposé entre le premier amplificateur et le premier dispositif émetteur/récepteur et transmettant le signal en provenance du premier amplificateur vers le premier dispositif émetteur/récepteur, un élément de mise en cohérence de polarisation disposé en amont du coupleur à maintien de polarisation, et un détecteur équilibré disposé en aval du coupleur à maintien de polarisation. La sonde comprend également, un deuxième séparateur disposé entre la source laser et le premier séparateur pour séparer le signal issu de la source laser en deux signaux à destination respective du premier séparateur et d'un troisième séparateur du signal en provenance de la source laser en un signal transmis vers un deuxième amplificateur et un signal transmis vers le coupleur à maintien de polarisation, et un deuxième dispositif émetteur/récepteur de faisceau selon une deuxième direction distincte de la première direction. La sonde comprend, en outre, un deuxième séparateur de faisceau rétrodiffusé disposé entre le deuxième amplificateur et le deuxième dispositif émetteur/récepteur et transmettant le signal en provenance du deuxième amplificateur vers le deuxième dispositif émetteur/récepteur. La sonde est également pourvue d'une première et d'une deuxième voies de retour pour transmettre respectivement le signal rétrodiffusé du premier séparateur de faisceau rétrodiffusé en entrée du premier séparateur, et le signal rétrodiffusé du deuxième séparateur de faisceau rétrodiffusé en entrée du troisième séparateur.

Une telle sonde permet de réaliser les mesures de la vitesse relative par rapport a l'air selon deux directions différentes, en évitant la duplication de nombreux éléments d'une sonde mono-axe, notamment la source laser, le premier amplificateur, le détecteur équilibré, et même le traitement du signal de sortie par une unité de calcul électronique vers laquelle les données de sortie de la sonde sont transmises.

Selon un mode de réalisation, la sonde d'anémométrie laser comprend un troisième amplificateur disposé entre la source laser et le deuxième séparateur.

L'ajout d'un amplificateur directement en sortie de la source laser, permet, à coût supplémentaire limité, d'amplifier le signal émis par la source laser pour l'ensemble de la sonde bi-axe.

Par exemple, ledit élément de mise en cohérence de polarisation est disposé entre le premier séparateur et le coupleur à maintien de polarisation, ou entre le troisième séparateur et le coupleur à maintien de polarisation.

En variante, ledit élément de mise en cohérence de polarisation est disposé entre le deuxième séparateur et le premier séparateur, ou entre le deuxième séparateur et le troisième séparateur.

L'élément de mise en cohérence de polarisation peut être disposé à ces différents endroits de la sonde, pour un résultat identique.

Selon un mode de réalisation, la sonde d'anémométrie laser comprend des moyens de décalage de fréquence disposés entre le premier séparateur et le coupleur à maintien de polarisation, ou entre le troisième séparateur et le coupleur à maintien de polarisation.

En variante, les moyens de décalage de fréquence sont disposés entre le deuxième séparateur et le premier séparateur, ou entre le deuxième séparateur et le troisième séparateur.

Les , les moyens de décalage de fréquence peuvent être disposés à ces différents endroits de la sonde, pour un résultat identique.

Dans un mode de réalisation, le deuxième séparateur est un séparateur 50/50, transmettant des intensités identiques sur ses deux sorties, à destination des premier et troisième séparateurs.

Ainsi, les puissances des signaux transmis sur chacune des voies de mesure sont identiques, ce qui facilite les ajustements de puissance des premier et deuxième amplificateurs.

Selon un mode de réalisation, les premier et troisième séparateurs sont des séparateurs 90/10, transmettant 90% du signal provenant du deuxième séparateur vers l'amplificateur correspondant, et les 10 % restant du signal provenant du deuxième séparateur vers le coupleur à maintien de polarisation, et transmettant 90% du signal reçu par la voie de retour correspondante vers le coupleur à maintien de polarisation, et les 10 % restant du signal reçu par la voie de retour correspondante vers l'amplificateur correspondant.

Ainsi, seulement 10% de la puissance du signal rétrodiffusé est inutilisée car redirigée vers l'amplificateur correspondant de la voie de mesure correspondante, tandis que 90% de la puissance est utilisée dans le mélange cohérent du coupleur à maintien de polarisation CPLMP. D'autre part, comme 10% de l'onde de référence issue du deuxième séparateur SEP2 est dirigée vers le coupleur à maintien de polarisation CPLMP, la puissance nécessaire en sortie du troisième amplificateur AMP3 est faible.

Selon un autre aspect de l'invention, il est également proposé un procédé de gravure sur plaquette de verre par technologie optique intégrée, d'une sonde d'anémométrie laser telle que précédemment décrite.

L'utilisation de la technologie optique intégrée consistant à graver les guides d'ondes optiques sur une plaquette en verre, permet une production à grande échelle à coût réduit.

L'invention sera mieux comprise à l'étude de quelques modes de réalisation décrits à titre d'exemples nullement limitatifs et illustrés par les dessins annexés sur lesquels :
- la figure 1 illustre une sonde d'anémométrie laser mono-axe existante ;
- la figure 2 illustre une sonde d'anémométrie laser bi-axe, selon un aspect de l'invention ; et
- la figure 3 illustre une sonde d'anémométrie laser bi-axe, selon un autre aspect de l'invention.

Sur l'ensemble de figures, les éléments ayants les mêmes références sont similaires.

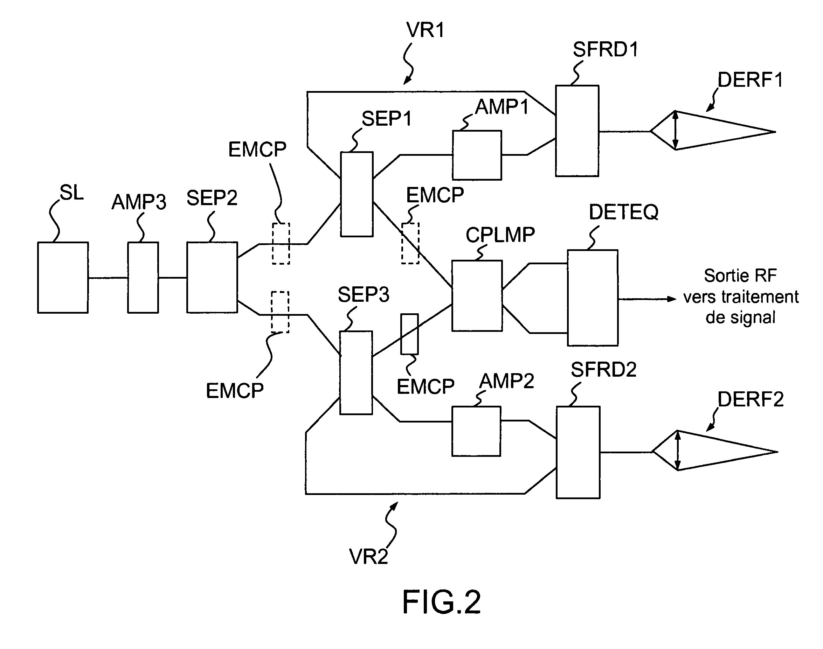

Tel qu'illustré sur la figure 2, une sonde d'anémométrie laser bi-axe comprend une source laser SL fournissant une onde de référence polarisée linéairement, un premier séparateur SEP1 séparant le signal en provenance de la source laser SL en un signal transmis vers un premier amplificateur AMP1 et un signal transmis vers un coupleur à maintien de polarisation CPLMP.

La sonde d'anémométrie laser bi-axe comprend également un premier dispositif émetteur/récepteur DERF1 de faisceau selon une première direction, ou par léger abus de langage selon un premier axe, ainsi qu'un premier séparateur de faisceau rétrodiffusé SFRD1 disposé entre le premier amplificateur AMP1 et le premier dispositif émetteur/récepteur DERF1.

La sonde d'anémométrie laser bi-axe est, en outre, munie d'un deuxième dispositif émetteur/récepteur DERF2 de faisceau selon une deuxième direction distincte de la première direction, ou par léger abus de langage selon un deuxième axe distinct ou de direction différente du premier axe, ainsi que d'un deuxième séparateur de faisceau rétrodiffusé SFRD2 disposé entre le deuxième amplificateur AMP2 et le deuxième dispositif émetteur/récepteur DERF2.

Le signal rétrodiffusé par le premier dispositif émetteur/récepteur DERF1 est transmis par le premier séparateur de faisceau rétrodiffusé SFRD1 vers le premier séparateur SEP1 par une première voie de retour VR1. De manière similaire, le signal rétrodiffusé par le deuxième dispositif émetteur/récepteur DERF2 est transmis par le deuxième séparateur de faisceau rétrodiffusé SFRD2 vers le troisième séparateur SEP3 par une deuxième voie de retour VR2.

Le premier séparateur de faisceau rétrodiffusé SFRD1 transmet, ou, en d'autres termes, laisse passer le signal en provenance du premier amplificateur AMP1 vers le premier dispositif émetteur/récepteur DERF1, et transmet le faisceau rétrodiffusé en provenance du premier dispositif émetteur/récepteur DERF1 vers la première voie de retour VR1 avec une polarisation de l'onde tournée de 90° par rapport à l'onde reçue du premier amplificateur AMP1. De manière similaire, le deuxième séparateur de faisceau rétrodiffusé SFRD2 transmet, ou, en d'autres termes, laisse passer le signal en provenance du deuxième amplificateur AMP2 vers le deuxième dispositif émetteur/récepteur DERF2, et transmet le faisceau rétrodiffusé en provenance du deuxième dispositif émetteur/récepteur DERF2 vers la deuxième voie de retour VR2 avec une polarisation de l'onde tournée de 90° par rapport à l'onde reçue du deuxième amplificateur AMP2.

La sonde d'anémométrie laser bi-axe comprend, en outre, un élément de mise en cohérence de polarisation EMCP disposé en amont du coupleur à maintien de polarisation CPLMP, et un détecteur équilibré DETEQ disposé en aval du coupleur à maintien de polarisation CPLMP.

Les deux signaux de sortie du coupleur à maintien de polarisation sont transmis au détecteur équilibré DETEQ, qui, par exemple, comprend deux diodes, et délivre en sortie la différence des signaux fournis par les deux diodes. Le signal de sortie du détecteur équilibré DETEQ est ensuite transmis à une unité de commande électronique non représentée, pour être traité. La mise en oeuvre d'une détection équilibrée permet de s'affranchir du bruit d'intensité de la source laser SL.

Un troisième amplificateur AMP3, optionnel, est disposé entre la source laser SL et le deuxième séparateur SEP2, pour amplifier la source laser, si nécessaire, pour que les puissances transmises respectivement aux deux dispositifs émetteur/récepteur DERF1 et DERF2 de faisceaux soient suffisantes.

Comme représenté en pointillés sur la figure 2, l'élément de mise en cohérence de polarisation EMCP peut indifféremment être disposé entre le premier séparateur SEP1 et le coupleur à maintien de polarisation CPLMP, entre le troisième séparateur SEP3 et le coupleur à maintien de polarisation CPLMP, entre le deuxième séparateur SEP2 et le premier séparateur SEP1, ou entre le deuxième séparateur SEP2 et le troisième séparateur SEP3.

Le deuxième séparateur SEP2 peut être, par exemple, un séparateur 50/50, transmettant des intensités identiques sur ses deux sorties, à destination des premier et troisième séparateurs SEP1 et SEP3. En ce cas, les ajustements de puissance des premier et deuxième amplificateurs AMP1, AMP2 sont facilités car de faible amplitude.

En outre, les premier et troisième séparateurs SEP1, SEP3 peuvent, par exemple, être des séparateurs 90/10, transmettant 90% du signal provenant du deuxième séparateur SEP2 vers l'amplificateur correspondant AMP1, AMP2, et les 10 % restant du signal provenant du deuxième séparateur SEP2 vers le coupleur à maintien de polarisation CPLMP, et transmettant 90% du signal reçu par la voie de retour correspondante VR1, VR2 vers le coupleur à maintien de polarisation CPLMP, et les 10 % restant du signal reçu par la voie de retour correspondante vers l'amplificateur correspondant AMP1, AMP2.

Ainsi, seulement 10% de la puissance du signal rétrodiffusé est inutilisée car redirigée vers l'amplificateur correspondant de la voie de mesure correspondante, tandis que 90% de la puissance est utilisée dans le mélange cohérent du coupleur à maintien de polarisation CPLMP. D'autre part, comme 10% de l'onde de référence issue du deuxième séparateur SEP2 est dirigée vers le coupleur à maintien de polarisation CPLMP, la puissance nécessaire en sortie du troisième amplificateur AMP3 est faible.

La présente invention utilise le fait que le signal rétrodiffusé et orienté sur les deux voies de retour VR1 et VR2 respectivement par les premier et deuxième séparateurs de faisceau rétrodiffusé SFRD1 et SFRD2 est polarisé orthogonalement au signal provenant respectivement des premier et deuxième amplificateur AMP1 et AMP2 car les premier et deuxième séparateurs de faisceau rétrodiffusé SFRD sont des dispositifs de séparation de polarisation. La rotation de polarisation de l'onde rétrodiffusée impose d'utiliser un élément de mise en cohérence de polarisation EMCP pour pouvoir effectuer le mélange cohérent de l'onde rétrodiffusée et de l'onde de référence. On utilise un élément de mise en cohérence de polarisation EMCP sur un guide d'onde, pour l'onde de référence d'une voie et pour le signal rétrodiffusé de l'autre voie afin d'obtenir deux mesures selon deux polarisations différentes ne pouvant donc pas se perturber par mélange cohérent.

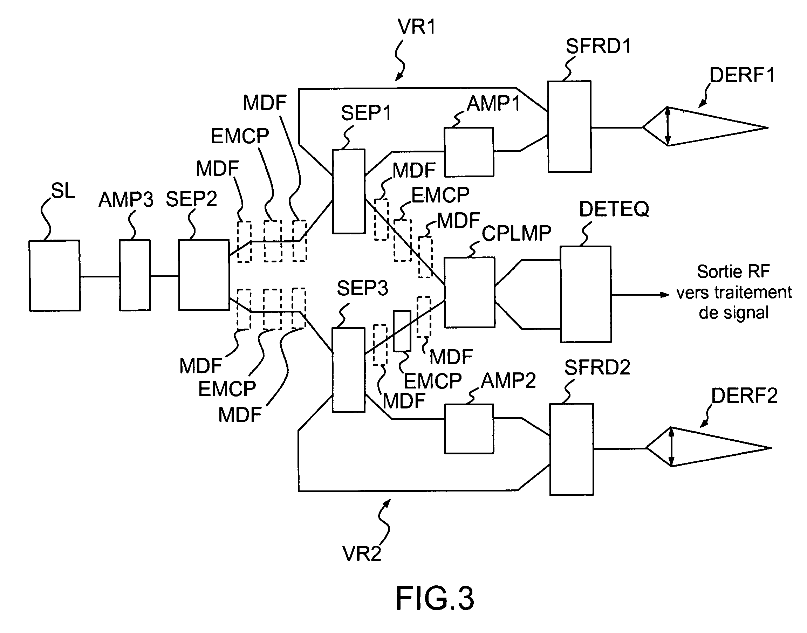

En variante, comme illustré sur la figure 3, la sonde d'anémométrie laser bi-axe peut également comprendre des moyens de décalage de fréquence MDF disposés entre le premier séparateur SEP1 et le coupleur à maintien de polarisation CPLMP, entre le troisième séparateur SEP3 et le coupleur à maintien de polarisation CPLMP, entre le deuxième séparateur SEP2 et le premier séparateur SEP1, ou entre le deuxième séparateur SEP2 et le troisième séparateur SEP3. En outre, les moyens de décalage de fréquence MDF peuvent, selon l'emplacement de l'élément de mise en cohérence de polarisation EMCP variable évoqué précédemment, être disposés en amont ou en aval de l'élément de mise en cohérence de polarisation EMCP.

Dans la présente invention, pour l'ensemble des modes de réalisation, les taux de séparation des signaux d'entrées des premier, deuxième et troisième séparateurs SEP1, SEP2, SEP3 ne sont pas limités aux taux 50/50 ou 90/10 cités en exemple, ils peuvent prendre toute autre valeur souhaitée. En effet, les trois taux de séparations des premier, deuxième et troisième séparateurs SEP1, SEP2, SEP3 peuvent être optimisés, en fonction des caractéristiques techniques de la source laser OL et du détecteur équilibré DETEQ de manière à ne masquer le signal ni par le bruit d'intensité de la source laser, ni par le bruit du détecteur équilibré DETEQ.

La présente invention permet donc de déterminer avec précision la vitesse relative d'un aéronef par rapport à l'air environnant, à coût réduit, et risque de panne limité.

## Revendications

1. Sonde d'anémométrie laser de détection homodyne optique de décalage de fréquence par effet Doppler, comprenant une source laser (SL) pour fournir une onde de référence polarisée linéairement, un premier séparateur (SEP1) du signal en provenance de la source laser (SL) en un signal transmis vers un premier amplificateur (AMP1) et un signal transmis vers un coupleur à maintien de polarisation (CPLMP), un premier dispositif émetteur/récepteur (DERF1) de faisceau selon une première direction, un premier séparateur de faisceau rétrodiffusé (SFRD1) disposé entre le premier amplificateur (AMP1) et le premier dispositif émetteur/récepteur (DERF1) et transmettant le signal en provenance du premier amplificateur (AMP1) vers le premier dispositif émetteur/récepteur (DERF1), un élément de mise en cohérence de polarisation (EMCP), sur un guide d'onde, pour l'onde de référence d'une voie et pour le signal rétrodiffusé de l'autre voie afin d'obtenir deux mesures selon deux polarisations différentes ne pouvant pas se perturber par mélange cohérent, disposé en amont du coupleur à maintien de polarisation (CPLMP), et un détecteur équilibré (DETEQ) disposé en aval du coupleur à maintien de polarisation (CPLMP), **caractérisé en ce qu'**elle comprend, en outre, un deuxième séparateur (SEP2) disposé entre la source laser (SL) et le premier séparateur (SEP1) pour séparer le signal issu de la source laser (SL) en deux signaux à destination respective du premier séparateur (SEP1) et d'un troisième séparateur (SEP3) du signal en provenance de la source laser (SL) en un signal transmis vers un deuxième amplificateur (AMP2) et un signal transmis vers le coupleur à maintien de polarisation (CPLMP), un deuxième dispositif émetteur/récepteur (DERF2) de faisceau selon une deuxième direction distincte de la première direction, un deuxième séparateur de faisceau rétrodiffusé (SFRD2) disposé entre le deuxième amplificateur (AMP2) et le deuxième dispositif émetteur/récepteur (DERF2) et adapté pour transmettre le signal en provenance du deuxième amplificateur (AMP2) vers le deuxième dispositif émetteur/récepteur (DERF2), et une première et une deuxième voies de retour (VR1, VR2) pour transmettre respectivement le signal rétrodiffusé du premier séparateur de faisceau rétrodiffusé (SFRD1) en entrée du premier séparateur (SEP1), et le signal rétrodiffusé du deuxième séparateur de faisceau rétrodiffusé (SFRD2) en entrée du troisième séparateur (SEP3).

2. Sonde d'anémométrie laser selon la revendication 1, comprenant un troisième amplificateur (AMP3) disposé entre la source laser (SL) et le deuxième séparateur (SEP2).

3. Sonde d'anémométrie laser selon la revendication 1 ou 2, dans lequel ledit élément de mise en cohérence de polarisation (EMCP) est disposé entre le premier séparateur (SEP1) et le coupleur à maintien de polarisation (CPLMP), ou entre le troisième séparateur (SEP3) et le coupleur à maintien de polarisation (CPLMP).

4. Sonde d'anémométrie laser selon la revendication 1 ou 2, dans lequel ledit élément de mise en cohérence de polarisation (EMCP) est disposé entre le deuxième séparateur (SEP2) et le premier séparateur (SEP1), ou entre le deuxième séparateur (SEP2) et le troisième séparateur (SEP3).

5. Sonde d'anémométrie laser selon l'une des revendications 1 à 4, comprenant des moyens de décalage de fréquence (MDF) disposés entre le premier séparateur (SEP1) et le coupleur à maintien de polarisation (CPLMP), ou entre le troisième séparateur (SEP3) et le coupleur à maintien de polarisation (CPLMP).

6. Sonde d'anémométrie laser selon l'une des revendications 1 à 4, comprenant des moyens de décalage de fréquence (MDF) disposés entre le deuxième séparateur (SEP2) et le premier séparateur (SEP1), ou entre le deuxième séparateur (SEP2) et le troisième séparateur (SEP3).

7. Sonde d'anémométrie laser selon l'une des revendications 1 à 6, dans laquelle le deuxième séparateur (SEP2) est un séparateur 50/50, transmettant des intensités identiques sur ses deux sorties, à destination des premier et troisième séparateurs (SEP1, SEP3).

8. Sonde d'anémométrie laser selon l'une des revendications 1 à 7, dans laquelle les premier et troisième séparateurs (SEP1, SEP3) sont des séparateurs 90/10, transmettant 90% du signal provenant du deuxième séparateur (SEP2) vers l'amplificateur correspondant (AMP1, AMP2) et les 10 % restant du signal provenant du deuxième séparateur (SEP2) vers le coupleur à maintien de polarisation (CPLMP), et transmettant 90% du signal reçu par la voie de retour correspondante (VR1, VR2) vers le coupleur à maintien de polarisation (CPLMP), et les 10 % restant du signal reçu par la voie de retour correspondante vers l'amplificateur correspondant (AMP1, AMP2).

9. Procédé de gravure sur plaquette de verre par technologie optique intégrée, d'une sonde d'anémométrie laser selon l'une des revendications 1 à 8.

## Claims

1. A laser anemometry probe for optical homodyne detection of frequency offset by Doppler effect, comprising a laser source (SL) for providing a linearly polarised reference wave, a first splitter (SEP1) for splitting the signal originating from the laser source (SL) into a signal transmitted to a first amplifier (AMP1) and a signal transmitted to a polarisation maintenance coupler (CPLMP), a first device (DERF1) for emitting/receiving beams in a first direction, a first backscattered beam splitter (SFRD1) disposed between the first amplifier (AMP1) and the first emitting/receiving device (DERF1) and transmitting the signal originating from the first amplifier (AMP1) to the first emitting/receiving device (DERF1), a polarisation coherence element (EMCP), on a waveguide, for the reference wave of a channel and for the signal backscattered from the other channel so as to obtain two measurements according to two different polarisations that cannot interfere with one another by coherent mixing, disposed upstream of the polarisation maintenance coupler (CPLMP), and a balanced detector (DETEQ) disposed downstream of the polarisation maintenance coupler (CPLMP), **characterised in that** it further comprises a second splitter (SEP2) disposed between the laser source (SL) and the first splitter (SEP1) for splitting the signal coming from the laser source (SL) into two signals respectively destined for the first splitter (SEP1) and a third splitter (SEP3) for splitting the signal originating from the laser source (SL) into a signal transmitted to a second amplifier (AMP2) and a signal transmitted to the polarisation maintenance coupler (CPLMP), a second device (DERF2) for emitting/receiving beams in a second direction that is distinct from the first direction, a second backscattered beam splitter (SFRD2) disposed between the second amplifier (AMP2) and the second emitting/receiving device (DERF2) and designed to transmit the signal originating from the second amplifier (AMP2) to the second emitting/receiving device (DERF2), and a first and second return channels (VR1, VR2) for respectively transmitting the backscattered signal of the first backscattered beam splitter (SFRD1) to the input of the first splitter (SEP1) and the backscattered signal of the second backscattered beam splitter (SFRD2) to the input of the third splitter (SEP3).

2. The laser anemometry probe according to claim 1, comprising a third amplifier (AMP3) disposed between the laser source (SL) and the second splitter (SEP2).

3. The laser anemometry probe according to claim 1 or 2, wherein said polarisation coherence element (EMCP) is disposed between the first splitter (SEP1) and the polarisation maintenance coupler (CPLMP) or between the third splitter (SEP3) and the polarisation maintenance coupler (CPLMP).

4. The laser anemometry probe according to claim 1 or 2, wherein said polarisation coherence element (EMCP) is disposed between the second splitter (SEP2) and the first splitter (SEP1) or between the second splitter (SEP2) and the third splitter (SEP3).

5. The laser anemometry probe according to any one of claims 1 to 4, comprising frequency offset means (MDF) disposed between the first splitter (SEPL) and the polarisation maintenance coupler (CPLMP) or between the third splitter (SEP3) and the polarisation maintenance coupler (CPLMP).

6. The laser anemometry probe according to any one of claims 1 to 4, comprising frequency offset means (MDF) disposed between the second splitter (SEP2) and the first splitter (SEP1) or between the second splitter (SEP2) and the third splitter (SEP3).

7. The laser anemometry probe according to any one of claims 1 to 6, wherein the second splitter (SEP2) is a 50/50 splitter transmitting identical intensities on its two outputs that are destined for the first and third splitters (SEP1, SEP3).

8. The laser anemometry probe according to any one of claims 1 to 7, wherein the first and third splitters (SEP1, SEP3) are 90/10 splitters transmitting 90% of the signal originating from the second splitter (SEP2) to the corresponding amplifier (AMP1, AMP2) and the remaining 10% of the signal originating from the second splitter (SEP2) to the polarisation maintenance coupler (CPLMP) and transmitting 90% of the signal received via the corresponding return channel (VR1, VR2) to the polarisation maintenance coupler (CPLMP) and the remaining 10% of the signal received via the corresponding return channel to the corresponding amplifier (AMP1, AMP2).

9. A method for etching a laser anemometry probe according to any one of claims 1 to 8 onto a glass plate using integrated optical technology.

## Patentansprüche

1. Laser-Windmessersonde zur homodynen optischen Detektion mittels Frequenzversatz durch Doppler-Effekt, umfassend eine Laserquelle (SL) zum Erzeugen einer linear polarisierten Referenzwelle, einen ersten Splitter (SEP1) zum Teilen des von der Laserquelle (SL) kommenden Signals in ein zu einem ersten Verstärker (AMP1) gesendetes Signal und ein zu einem Polarisationshaltungskoppler (CPLMP) gesendetes Signal, eine erste Vorrichtung (DERF1) zum Senden/Empfangen von Strahlen in einer ersten Richtung, einen ersten Rückstreustrahlensplitter (SFRD1) zwischen dem ersten Verstärker (AMP1) und der ersten Sende-/Empfangsvorrichtung (DERF1) zum Senden des vom ersten Verstärker (AMP1) stammenden Signals zur ersten Sende-/Empfangsvorrichtung (DERF1), ein Polarisationskohärenzelement (EMCP) auf einem Wellenleiter für die Referenzwelle eines Kanals und für das von dem anderen Kanal zurückgestreute Signal, um zwei Messwerte gemäß zwei unterschiedlichen Polarisationen zu erhalten, die einander nicht durch kohärentes Mischen stören können, oberhalb des Polarisationshaltungskopplers (CPLMP) angeordnet, und einen symmetrischen Detektor (DETEQ) unterhalb des Polarisationshaltungskopplers (CPLMP), **dadurch gekennzeichnet, dass** sie ferner Folgendes umfasst: einen zweiten Splitter (SEP2), der zwischen der Laserquelle (SL) und dem ersten Splitter (SEP1) angeordnet ist, zum Teilen des von der Laserquelle (SL) kommenden Signals in zwei Signale, jeweils bestimmt für den ersten Splitter (SEP1) und einen dritten Splitter (SEP3) zum Teilen des von der Laserquelle (SL) kommenden Signals in ein zu einem zweiten Verstärker (AMP2) gesendetes Signal und ein zum Polarisationshaltungskoppler (CPLMP) gesendetes Signal, eine zweite Vorrichtung (DERF2) zum Senden/Empfangen von Strahlen in einer zweiten Richtung, die sich von der ersten Richtung unterscheidet, wobei ein zweiter Rückstreustrahlensplitter (SFRD2) zwischen dem zweiten Verstärker (AMP2) und der zweiten Sende-/Empfangsvorrichtung (DERF2) angeordnet ist und die Aufgabe hat, das vom zweiten Verstärker (AMP2) kommende Signal zur zweiten Sende-/Empfangsvorrichtung (DERF2) zu senden, und einen ersten und einen zweiten Rückkanal (VR1, VR2) zum jeweiligen Senden des zurückgestreuten Signals des ersten Rückstreustrahlensplitters (SFRD1) zum Eingang des ersten Splitters (SEP1) und des zurückgestreuten Signals des zweiten Rückstreustrahlensplitters (SFRD2) zum Eingang des dritten Splitters (SEP3).

2. Laser-Windmessersonde nach Anspruch 1, die einen dritten Verstärker (AMP3) umfasst, der zwischen der Laserquelle (SL) und dem zweiten Splitter (SEP2) angeordnet ist.

3. Laser-Windmessersonde nach Anspruch 1 oder 2, wobei das Polarisationskohärenzelement (EMCP) zwischen dem ersten Splitter (SEP1) und dem Polarisationshaltungskoppler (CPLMP) oder zwischen dem dritten Splitter (SEP3) und dem Polarisationshaltungskoppler (CPLMP) angeordnet ist.

4. Laser-Windmessersonde nach Anspruch 1 oder 2, wobei das Polarisationskohärenzelement (EMCP) zwischen dem zweiten Splitter (SEP2) und dem ersten Splitter (SEP1) oder zwischen dem zweiten Splitter (SEP2) und dem dritten Splitter (SEP3) angeordnet ist.

5. Laser-Windmessersonde nach einem der Ansprüche 1 bis 4, die Frequenzversatzmittel (MDF) umfasst, die zwischen dem ersten Splitter (SEP1) und dem Polarisationshaltungskoppler (CPLMP) oder zwischen dem dritten Splitter (SEP3) und dem Polarisationshaltungskoppler (CPLMP) angeordnet sind.

6. Laser-Windmessersonde nach einem der Ansprüche 1 bis 4, die Frequenzversatzmittel (MDF) umfasst, die zwischen dem zweiten Splitter (SEP2) und dem ersten Splitter (SEP1) oder zwischen dem zweiten Splitter (SEP2) und dem dritten Splitter (SEP3) angeordnet sind.

7. Laser-Windmessersonde nach einem der Ansprüche 1 bis 6, wobei der zweite Splitter (SEP2) ein 50/50-Splitter ist, der identische Intensitäten auf seinen beiden Ausgängen sendet, die für den ersten und dritten Splitter (SEP1, SEP3) bestimmt sind.

8. Laser-Windmessersonde nach einem der Ansprüche 1 bis 7, wobei der erste und der dritte Splitter (SEP1, SEP3) 90/10-Splitter sind, die 90 % des vom zweiten Splitter (SEP2) kommenden Signals zum entsprechenden Verstärker (AMP1, AMP2) und die übrigen 10 % des vom zweiten Splitter (SEP2) kommenden Signals zum Polarisationshaltungskoppler (CPLMP) sendet und 90 % des über den entsprechenden Rückkanal (VR1, VR2) empfangenen Signals zum Polarisationshaltungskoppler (CPLMP) und die übrigen 10 % des über den entsprechenden Rückkanal empfangenen Signals zum entsprechenden Verstärker (AMP1, AMP2) sendet.

9. Verfahren zum Ätzen einer Laser-Windmessersonde nach einem der Ansprüche 1 bis 8 auf eine Glasplatte unter Anwendung von integrierter optischer Technologie.
